Europäisches Patentamt

European Patent Office

Office européen des brevets

(19)

(11) Veröffentlichungsnummer: **0 339 467 B1**

(12) # EUROPÄISCHE PATENTSCHRIFT

(45) Veröffentlichungstag der Patentschrift: **11.11.92**

(21) Anmeldenummer: **89107042.7**

(22) Anmeldetag: **19.04.89**

(51) Int. Cl.⁵: **H04M 3/50**, H04Q 11/04, H04L 12/54

(54) **Verfahren und Vorrichtung zur Bildung elektronischer, aus Sprach- und Nichtsprachbestandteilen bestehender Kommunikationsdienstnachrichten.**

(30) Priorität: **29.04.88 DE 3814659**

(43) Veröffentlichungstag der Anmeldung:
**02.11.89 Patentblatt 89/44**

(45) Bekanntmachung des Hinweises auf die Patenterteilung:
**11.11.92 Patentblatt 92/46**

(84) Benannte Vertragsstaaten:
**AT BE CH DE FR GB LI NL**

(56) Entgegenhaltungen:
**EP-A- 0 140 111**
**EP-A- 0 309 993**
**WO-A-87/07801**
**DE-A- 3 234 081**

**IEEE GLOBAL TELECOMMUNICATIONS CONFERENCE, New Orleans, Louisiana, 2.-5. Dezember 1985, Band 1, "Paper 12.5", Seiten 363-367, IEEE, New York, US; L. CHIARIGLIONE et al.: "Multimedia communication at the basic ISDN access"**

(73) Patentinhaber: **SIEMENS AKTIENGESELL-SCHAFT**
**Wittelsbacherplatz 2**
**W-8000 München 2(DE)**

(72) Erfinder: **Frantzen, Victor,**
**Vogelanger 7,**
**W-8000 München 71(DE)**
Erfinder: **Gösswein, Hans Martin**
**Bert-Brecht-Allee 83**
**W-8000 München 83(DE)**

EP 0 339 467 B1

AT & T TECHNOLOGY, Band 2, Nr. 3, 1987, Seiten 4-13, Short Hills, NJ, US; J.W. TIMKO: "AT & T systems architecture"

INTERNATIONAL SWITCHING SYMPOSIUM, Phoenix, Arizona, 15.-20. März 1987, Band 4, "Paper A11.6", Seiten 875-879, IEEE, New York, US; P. LYHNE et al.: "ISDN - a basis for enhanced and new services for the next decades"

PROCEEDINGS OF THE 7TH INTERNATIONAL CONFERENCE ON COMPUTER COMMUNICA- TION, Sydney, 30. Oktober - 2. November 1984, Seiten 252-257, Elsevier Science Pu- blishers B.V. (North-Holland), Amsterdam, NL; G. ARNDT: "How the ISDN meets functio- nal requirements of the office"

NACHRICHTENTECHNIK-ELEKTRONIK, Band 37, Nr. 10, 1987, Seiten 376-378, Berlin, DE; R. BREMER: "ISDN-Benutzerteil des Zeichenga- besystems CCITT Nr. 7"

PATENT ABSTRACTS OF JAPAN, Band 10, Nr. 42 (E-382)[2099], 19. Februar 1986 & JP- A-60 197 047

PATENT ABSTRACTS OF JAPAN, Band 9, Nr. 150 (E-324)[1873], 25. Juni 1985 & JP-A-60 30 244

**Beschreibung**

Bekannte Kommunikationsnebenstellenanlagen, die den CCITT-Empfehlungen für das diensteintegrierende, digitale Fernmeldenetz (Integrated Services Digital Network ISDN) entsprechen, weisen beispielsweise sogenannte Einkanal-ISDN-Schnittstellen (B + D) und Doppelkanal-ISDN-Schnittstellen (B + B + D) auf. An die Einkanal-ISDN-Schnittstellen sind digitale Sprachendgeräte und an die Doppelkanal-ISDN-Schnittstellen sind einfunktionale Sprach- und/oder Datenendgeräte oder ein multifunktionales Endgerät anschließbar. Mit mindestens zwei einfunktionalen Endgeräten oder einem mulitifunktionalen Endgerät ist simultane Mehrfachkommunikation in der Weise möglich, daß zwischen zwei derartigen Nebenstellen beispielsweise während einer Fernsprechverbindung zusätzlich Daten zwischen kompatiblen Endgeräten beider Nebenstellen übertragbar sind. Eine solche Kommunikationsnebenstellenanlage ist aus der Produktschrift der Firma Siemens "HICOM 600 System Product Data", Bestell-Nummer A 19100-K3161-G430-01-7600 bekannt.

Die bekannte Kommunikationsnebenstelle kann ferner zentralisierte, den Nebenstellen zugeordnete Speichereinrichtungen aufweisen, in die Nachrichten von internen Nebenstellen und externen Endgeräten eingebbar und von den zugehörigen internen Nebenstellen abrufbar sind.

Der Erfindung liegt die Aufgabe zugrunde, ein Verfahren zur Bildung von Nachrichten zu schaffen, die aus Sprach- und Nichtsprachbestandteilen bestehen und dabei einheitlich von einer sendenden Teilnehmerstelle zu einer empfangeden Teilnehmerstelle übertragbar sind, wobei jeweils ein Sprachendgerät und mindestens ein Datenendgerät mit einer gemeinsamen Teilnehmeranschlußschaltung verbunden und über eine gemeinsame Rufnummer anwählbar sind.

Dieses Verfahren ist im Patentanspruch 1 definiert.

Die Erfindung zeichnet sich durch mehrere Vorteile aus. Die Bildung der aus Sprach- und Nichtsprachbestandteilen bestehenden Nachrichten erfolgt mittels auf dem Markt vorhandener monofunktionaler Endgeräte, wie digitale Sprach-Terminals und Daten-Terminals. Die Sprach- und Nichtsprachbestandteile einer kombinierten Nachricht können sich gegenseitig ergänzen oder in keinem inhaltlichen Zusammenhang stehen. Insbesondere im letztgenannten Fall lassen sich die Sprach- und Nichtsprachbestandteile unabhängig voneinander durch die nachrichtenempfangende Teilnehmerstelle aus einer ihr zugeordneten Speichereinrichtung abrufen. Eine kombinierte Nachricht kann beispielsweise aus eine Sprach- und aus einer Datennachricht bestehen oder aus Mehrzahl von Sprach- und Datennachrichten bestehen. Im letztgenannten Fall können Sprachnachrichten ausgewählte Stellen der aus Einzeldatennachrichten zusammengesetzten Gesamtdatennachrichten ergänzen.

Als vorteilhaft erweist es sich auch, daß bei Nebenstellenanlagen, insbesondere bei ISDN-Nebenstellenanlagen und bei ISDN-Hauptanschlußteilnehmerendstellen ohnehin vorhandene Bedienfunktionen für das Verfahren gemäß der Erfindung übernommen werden können. Zu diesen Bedienfunktionen gehört beispielsweise im Zusammenhang mit dem Ein- und Ausspeichern von Nachrichten in zentralisierten Speichereinrichtungen die Einleitung, die Unterbrechung, die Korrektur und der Abschluß der Nachrichtenbildung und der Nachrichtenabruf.

Während im Vergleich zur Durchführung sogenannter elektronischer Post (Electronic Mail)-Verfahren jedoch für jede Kommunikationsart (Sprache, verschiedenartige Daten) unterschiedliche, als elektronische Briefkästen bezeichnete Speichereinrichtungen erforderlich sind, wird bei der Durchführung des Verfahrens gemäß der Erfindung nur eine Speichereinrichtung für die aus Sprachund Nichtsprachbestandteilen bestehenden Nachrichten benötigt. Die Bildung und der Abruf kombinierter Nachrichten erfolgt systemintern nach einem einheitlichen Protokoll; Sprach- und Datennachrichten werden in einem Format mit Kennzeichnung der Sprach- und Datennachrichten einheitlich dargestellt und verwaltet.

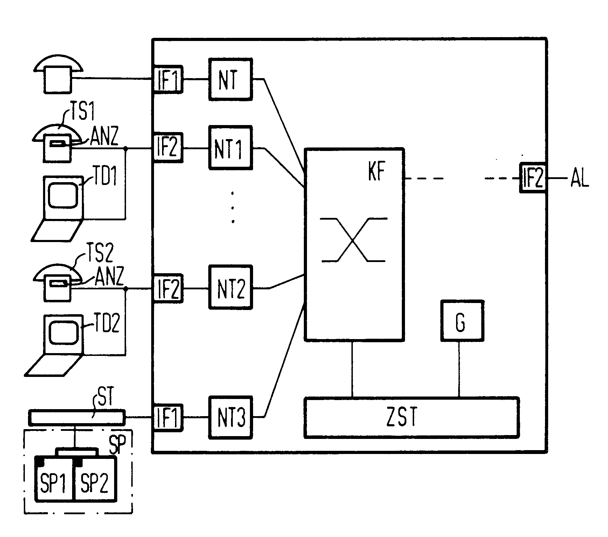

Das Verfahren gemäß der Erfindung wird nun anhand der Figur beschrieben.

Die Figur zeigt eine schematische Darstellung einer Kommunikationsdienstvermittlungsanlage, insbesondere einer Fernmeldenebenstellenanlage. Dabei sind nur die für das Verständnis der Erfindung notwendigen Komponenten dargestellt. Die Anlage weist eine zentrale Steuerung ZST, ein Koppelfeld KF, Teilnehmeranschlußschaltungen NT1, NT2, NT3 und Schnittstellen IF auf. Die Schnittstellen IF sind beispielsweise als Einkanal-ISDN-Schnittstellen IF1 und als Doppel kanal- ISDN-Schnittstellen IF2 ausgebildet. An den Einkanal-ISDN-Schnittstellen IF1 sind digitale Sprachendgeräte bzw. Datenendgeräte An die Doppelkanal-ISDN-Schnittstellen IF2 sind je ein digitales Sprachendgerät TS1, TS2 und ein Datenendgerät anschaltbar. TD1, TD2 angeschaltet. An eine der in der Figur dargestellten Einkanal-ISDN-Schnittstellen IF1 ist eine Anordnung aus Speichereinrichtungen SP und einer den Speichereinrichtungen SP zugeordneten Steuerung ST angeschaltet. Die Speichereinrichtungen SP bestehen beispielsweise aus einer ersten und einer zweiten Speichereinrichtung SP1, SP2, wobei die erste Speichereinrichtung SP1 dem ersten Sprachendgerät TS1 und dem ersten Datenendgerät TD1 und die zweiten Speichereinrichtung SP2 dem zweiten Sprachendgerät TS2 und dem zweiten Datenendgerät TD2 zugeordnet ist. Die Speichereinrichtungen können auch bestimmten Benutzern der Endgeräte, nicht den Endgeräten unmittelbar zugeordnet sein. Das Verfahren gemäß der Erfindung kann in beiden Varianten durchgeführt werden; im folgenden wird der erste Zuordnungsfall beschrieben.

Die Sprachendgeräte TS1 und TS2 können optische Anzeigeeinheiten ANZ aufweisen. Der zentralen Steuerung ZST ist eine Einrichtung G zugeordnet, die ausgelöst durch entsprechende Befehle der zentralen Steuerung ZST von den Sprachendgeräten TS1, TS2 und den Datenendgeräten TD1, TD2 akustisch und/oder optisch umsetzbare Hinweise auf den Status der Sprach- und Datennachrichten als Teil einer kombinierten Sprach- und Datennachricht erzeugt.

Eine derartige Kommunikationsdienstvermittlungsanlage ist in ihrer Grundstruktur bekannt. Insoweit erübrigt sich sowohl eine detaillierte Darstellung der schaltungstechnischen Realisierung als auch eine Beschreibung der Vorgänge bei einem Verbindungsaufbau, Verbindungsabbau sowie der Abspeicherung und dem Abruf von Nachrichten aus den Speichereinrichtungen SP.

Von den in der Figur dargestellten Sprach- und Datenendgeräten sind an der Durchführung des Verfahrens gemäß der Erfindung nur diejenigen Sprach- und Datenendgeräte beteiligt, die über eine gemeinsame Teilnehmeranschlußschaltung NT und vorzugsweise über eine gemeinsame Doppelkanal-ISDN-Schnittstelle miteinander verbunden sind.

Mit einem Sprachendgerät oder einem Datenendgerät sind Befehle erzeugbar, die der zentralen Steuerung ZST der Kommunikationsdienstvermittlunganlage zugeführt werden. Die im Rahmen des Verfahrens gemäß der Erfindung von den Endgeräten erzeugten Befehle gelangen über eine Schnittstelle IF2, die Teilnehmeranschlußschaltung NT1, das Koppelfeld KF zu der zentralen Steuerung ZST. Die zentale Steuerung leitet die von den Endgeräten abgegebenen Befehle an die den Speichereinrichtungen SP zugeordnete Steuereinrichtung ST, die die zugeführten Befehle in definierter Weise durchführt. In dieser Weise können die Steuerungen ZST und ST bei der Bildung und dem Abruf von Nachrichten insbesondere in Nebenstellenanlagen zusammenwirken. Die Abwicklung der von den Steuerungen ZST und ST durchzuführenden Vorgänge ist durch ein entsprechendes Betriebsprogramm definiert, das in einem in der Figur nicht dargestellten Speicher abgelegt ist. Das Verfahren gemäß der Erfindung ist jedoch auch im öffentlichen Bereich, insbesondere zwischen ISDN-Hauptanschlüssen durchführbar. Zwischen den beteiligten Hauptanschlüssen werden vorzugsweise virtuelle, für eine zwischen den Hauptanschlüssen angeordnete Steuerung transparente Signalisierungsverbindungen ("user-to user-signaling") hergestellt. Insoweit erfolgt das Verfahren der Erfindung unabhängig von der zentralen Steuerung ZST.

Zu den von den Endgeräten erzeugten Befehle gehört ein erster Befehl, der die Eingabe von Sprach- oder Datennachrichten in das Sprachendgerät oder in Ges Datenendgerät freigibt und der ferner die Einspeicherung eingegebener Sprachoder Datennachrichten in die Speichereinrichtung SP, beispielsweise in die Speichereinrichtung SP1, bewirkt. Mit einem zweiten Befehl wird das zuvor aktivierte Sprachendgerät oder das zuvor aktivierte Datenendgerät auf das jeweils entsprechend andere Endgerät, das mit dem zuvor aktivierten Endgerät über die gemeinsame TeilnehmeranschlußschaltungNT verbunden ist, also auf das Datenendgerät beziehungsweise auf das Sprachendgerät. Ausgelöst durch einen dritten Befehl, den sogenannten Abschlußbefehl, verknüpft die Steuerung ST die einzelnen Sprach- und Datennachrichten zu einer einheitlichen Gesamtnachricht.

Das Verfahren gemäß der Erfindung besteht aus den folgenden Schritten:
Von einem ersten Sprachendgerät TS1 oder von einem ersten Datenendgerät TD1, das mit dem Sprachendgerät TS1 über eine gemeinsame Teilnehmeranschlußschaltung NT1 verbunden ist, wird ein erster Befehl erzeugt, der die Erstellung einer aus Sprachund Nichtsprachbestandteilen bestehenden Nachricht kennzeichnet. Dieser Befehl wird über die den Endgeräten TS1 und TD1 zugeordnete Schnittstelle IF2, die gemeinsame Teilnehmeranschlußschaltung NT1, das Koppelfeld KF, die zentrale Steuerung ZST der Steuerung ST zugeführt, die den Speichereinrichtungen SP zugeordnet ist. Die Steuerung ST stellt eine Verbindung zwischen einer Speichereinrichtung SP, beispielsweise einer ersten Speichereinrichtung SP1, und demjenigen Endgerät TS1 oder TD1 her, das den ersten Befehl erzeugt hat. Damit wird die Eingabe von Sprachnachrichten in das Sprachendgerät TS1 beziehungsweise von Datennachrichten, d.h. von aus Nichtsprachbestandteilen bestehenden Nachrichten, in das Datenendgerät TD1 freigegeben.

Die eingegebenen Sprach- oder Datennachrichten werden in die Speichereinrichtung SP1 eingespeichert.

Das Endgerät TS1 oder TD1, das den ersten Befehl erzeugt hat und in das die Nachrichten zur Abspeicherung in der Speichereinrichtung SP1 eingegeben wurden, erzeugt einen zweiten Befehl. Dieser Befehl bewirkt die Umschaltung von dem zuvor aktivierten Endgerät TS1 oder TD1 auf das jeweils andere Endgerät TD1 oder TS1. Der zweite Befehl kann beispielsweise, wenn der erste Befehl von dem Sprachendgerät TS1 erzeugt wurde, in dem Auflegen des Telefonhörers bestehen. Wurde der erste Befehl von dem Datenengerät TD1 erzeugt, kann der zweite Befehl durch den die Dateneingabe abschließenden Schaltvorgang ausgelöst werden. Der zweite Befehl wird ebenfalls der Steuerung ST über den oben beschriebenen Weg zugeführt.

Die Steuerung ST nimmt den zweiten Befehl auf und schaltet die ursprünglich zwischen dem Endgerät TS1 und Speichereinrichtung SP1 beziehungsweise dem Endgerät TD1 und SP1 bestehende Verbindung auf das jeweils andere Endgerät TD1 oder TS1 um. Mit der Herstellung der Verbindung zwischen dem Endgerät TD1 und SP1 beziehungsweise alternativ hierzu TS1 und SP1 ist die Eingabe von Datennachrichten in das aktivierte Datenendgerät TD beziehungsweise die Eingabe von Sprachnachrichten in das aktivierte Sprachendgerät TS1 freigegeben. In das aktivierte Daten- bzw. Sprachendgerät TD1, TS1 eingegebene Daten- bzw. Sprachnachrichten werden in die erste Speichereinrichtung SP1 eingespeichert.

Die Eingabe der Nachrichten wird durch einen dritten Befehl des aktivierten Endgerätes TD1 oder TS1 abgeschlossen. Dieser Befehl kennzeichnet den Abschluß der zweiteiligen kombinierten Sprach- und Datennachricht und kann wie der zweite Befehl durch den die Dateneingabe abschließenden Schaltvorgang oder durch das Auflegen des Telefonhörers ausgelöst werden.

Die Steuerung ST verknüpft ausgelöst durch den ihr zugeführten dritten Befehl die beiden in die Speichereinrichtung SP1 eingespeicherten Nachrichten, also die Sprach- und die Datennachricht zu einer einreitlichen Gesamtnachricht und generiert damit ein Format, das die Übertragung der mehrteiligen kombinierten Sprach- und Datennachricht insbesondere an Speichereinrichtungen SP der gleichen Kommunikationsdienstvermittlungsanlage, an eine kompatible Kommunikationsdienstvermittlungsanlage oder an externe Hauptanschlußteilnehmerstellen ermöglicht. Dabei bleibt der Zugriff auf jede Einzelnachricht erhalten. Der Sprachbestandteil der Gesamtnachricht kann ebenso wie der Datenbestandteil der Gesamtnachricht unabhängig von dem jeweils anderen Nachrichtenbestandteil zu einem entsprechenden Sprach-bzw. Datenendgerät abgerufen werden.

Die Gesamtnachricht kann mehr als nur einen Sprach- und einen Datenbestandteil enthalten. Soll die Nachricht mehrere Bestandteile enthalten, beispielsweise mehrere Sprachbestandteile, die jeweils bestimmten Datennachrichten zugeordnet sind, ist von dem jeweils zuletzt aktivierten Datenendgerät TD oder Sprachendgerät TS vor dem dritten Befehl, der den Abschluß der Gesamtnachricht kennzeichnet, ein weiterer Befehl zu erzeugen, der eine weitere Umschaltung auf das jeweils andere, zuvor nicht aktiverte Endgerät bewirkt. Vor der Erzeugung der den Abschluß der mehrteiligen kombinierten sprach- und Datennachricht kennzeichnenden dritten Befehls erzeugt das durch die oben genannte Umschaltung aktivierte erste Datenendgerät TD1 oder Sprachendgerät TS1 also jeweils einen weitere Umschaltungen auf das jeweils andere zuvor nicht aktivierte erste Sprachendgerät TS1 oder Datenendgerät TD1 bewirkenden Befehl, der der Steuerung ST zugeführt wird. Die Steuerung ST gibt daraufhin die Eingabe von Sprachnachrichten oder von Datennachrichten in das durch die weiteren Umschaltungen aktivierte erste Sprachendgerät TS1 oder Datenendgerät TD1 frei und speichert eingegebene Sprach- oder Datennachrichten in die erste Speichereinrichtung SP1 ein. Der Abschluß der Gesamtnachrichtenbildung wird durch den dritten Befehl eingeleitet, der neben der Freigabe des durch den vorangegangenen Befehl aktivierten Endgeräts TS1 oder TD1 für die Eingabe einer Sprach- oder Datennachricht und die Einspeicherung dieser Nachricht die Verknüpfung aller Sprach-und Datennachrichten zu einer Gesamtnachricht bewirkt.

Die Steuerung ST kann für jede in die erste Speichereinrichtung SP1 einzuspeichernde Sprach- und Datennachricht einen durch das erste Sprachendgerät TS1 oder Datenendgerät TD1 umsetzbaren Hinweis auf den Status der betreffenden Sprach- oder Datennachricht als Teil einer kombinierten Sprach- und Datennachricht erzeugen. Sie bedient sich hierzu beispielsweise der Einrichtung G, die bei dem in der Figur dargestellten Ausführungsbeispiel unmittelbar der zentralen Steuerung ZST der Kommunikationsdienstvermittlungsanlage zugeordnet ist. Die Steuerung ST ordnet den gebildeten Hinweis der jeweiligen Sprachund Datennachricht zu und speichert ihn eingefügt in ein Hinweis und Sprach- oder Datennachricht verbindendes Format und/oder von der jeweiligen Sprach- oder Datennachricht getrennt in die erste Speichereinrichtung SP1 ab. Der Hinweis besteht aus einer abhörbaren Ansage oder aus einer datenendgerätkonformen Anzeige und kann neben der zuvor genannten Statusinformation Informationen umfassen, die die betreffende Nachricht als Sprach- oder Datennachricht ausweisen, die die Anzahl der in der kombinierten Nachricht enthaltenen Sprach- und Datennachrichten angeben, die ferner in an sich bekannter Weise angeben, ob eine bestimmte Nachricht neu ist, d.h. noch nicht abgerufen wurde, oder nicht neu ist. Auch ist der Zeitpunkt der Hinterlegung der Nachrichten in der zugehörigen Speichereinrichtung anzeigbar. Ein Vorteil des erfindungsgemäßen Verfahrens besteht in diesem Zusammenhang nun darin, daß an einem Datenendgerät auch Hinweise zu Sprachnachrichten und daß an einem Sprachendgerät auch Hinweise zu Datennachrichten abrufbar und akustisch und/oder optisch darstellbar sind. Das Verfahren gemäß der Erfindung kann auch in der Weise ausgestaltet werden, daß die genannten Hinweise den Endgeräten selbsttätig, also ohne besonderen Abrufbefehl seitens eines Endgeräts zustellbar sind.

Die Steuerung ST kann ferner für jede in die erste Speichereinrichtung SP1 einzuspeichernce Sprach- und Datennachricht eine die Gesamtzahl der Sprach- und Datennachrichten und die Reihenfolge der jeweiligen Sprach- und Datennachricht bezeichnende Information erzeugen. Die Steuerung ST speichert die Reihenfolgeinformation in Zuordnung zu der jeweiligen Sprach- oder Datennachricht und die Gesamtzahlinformation in Zuordnung zur Gesamtnachricht in die erste Speichereinrichtung SP1 ab. Die Abspeicherung der Reihenfolge- und/oder Gesamtzahlinformation kann eingefügt in ein diese Information und die eigentliche Sprachoder Datennachricht verbindendes Format und/oder von der jeweiligen Sprach- und Datennachricht getrennt erfolgen. Der Wechsel von Sprach- und Datennachrichten bei der Bildung einer kombinierten Gesamtnachricht ermöglicht es, eine inhaltliche Zuordnung der Sprach- und Datennachrichten zu erstellen. Datennachrichten lassen sich durch sprachliche Anmerkungen, also Sprachnachrichten, gezielt ergänzen ebenso wie Sprachnachrichten durch Datennachrichten.

Die gebildete Gesamtnachricht laßt sich aus der ersten Speichereinrichtung SP1 zu einer zweiten Speichereinrichtung SP2 der gleichen Kommunikationsdienstvermittlungsanlage oder aber zu einer kompatiblen externen Speichereinrichtung, beispielsweise einer fremden Kommunikationsdienstvermittlungsanlage durch einen entsprechenden Befehl des sendenden Endgeräts übertragen.

Nach Übertragung der von dem ersten Sprachendgerät TS1 und von dem ersten Datenendgerät TD1 erzeugten kombinierten Nachricht und gegebenenfalls des Statushinweises und der die Geamtzahl und die Reihenfolge der Sprach- und Datennachrichten innerhalb der kombinierten Nachricht bezeichnenden Information von der ersten Speichereinrichtung SP1 zu der zweiten Speichereinrichtung SP2 wird von einem zweiten Sprachendgerät TS2 oder einem zweiten Datenendgerät TD2, das mit dem zweiten Sprachendgerät TS2 über eine zweite Teilnehmeranschlußschaltung NT2 verbunden ist, ein erster Abrufbefehl zum Abruf einer Sprachnachricht oder Datennachricht aus der zweiten Speichereinrichtung SP2 erzeugt und der Steuerung ST zugeführt. Ausgelöst durch diesen ersten Abrufbefehl ruft die Steuerung ST die erste Sprachoder Datennachricht der kombinierten Nachricht aus der zweiten Speichereinrichtung SP2 ab und führt sie dem den ersten Abrufbefehl erzeugenden zweiten Sprachendgerät TS2 oder dem zweiten Datenendgerät TD2 zu.

Von dem zweiten Sprachendgerät TS2 oder dem zweiten Datenendgerät TD2, das den ersten Abrufbefehl erzeugt hat, wird ein zweiter, die Umschaltung von dem zuvor aktivierten zweiten Sprachendgerät TS2 auf das zweite Datenendgerät TD2 oder von dem zuvor aktivierten zweiten Datenendgerät TD2 auf das zweite Sprachendgerät bewirkender Befehl erzeugt und dieser Befehl wird der Steuerung ST zugeführt, die die erste Daten-oder Sprachnachricht der kombinierten Nachricht aus der zweiten Speichereinrichtung SP2 abruft und dem durch die Umschaltung aktivierten zweiten Datenendgerät TD2 oder Sprachendgerät TS2 zuführt.

Besteht die kombinierte Nachricht aus mehr als einer Sprachund Datennachricht, sind die weiteren Nachrichten von dem zweiten Sprachendgerät TS2 beziehungsweise zweiten Datenendgerät TD2 ebenfalls unter Mitwirkung von der Steuerung ST abrufbar. Die Steuerung ST greift hierzu auf die in der zweiten Speichereinrichtung SP2 abgespeicherte, die Gesamtzahl und die Reihenfolge der Sprach- und Datennachrichten innerhalb der kombinierten Nachricht bezeichnende Information zu, ruft in der durch die Reihenfolgeinformation bestimmten Reihenfolge Sprach- und Datennachrichten aus der zweiten Speichereinrichtung SP2 ab und führt diese dem zweiten Sprachendgerät TS2 bzw. dem zweiten Datenendgerät TD2 zu.

Von dem zweiten Sprachendgerät TS2 oder dem zweiten Datenendgerät TD2 ist auch en Abrufbefehl zum Abruf aller Sprach- und Datennachrichten einer kombinierten Nachricht aus der zweiten Speichereinrichtung SP2 erzeugbar. Die Steuerung ST greift ausgelöst durch diesen Abrufbefehl auf die die Gesamtzahl und Reihenfolge der Sprach- und Datennachricht bezeichnende Information zu und ruft in der durch die Reihenfolgeinformation bestimmten Reihenfolge Sprach- und Datennachrichten aus der zweiten Speichereinrichtung SP2 ab und führt die Sprach- oder Datennachricht dem zweiten Sprachendgerät TS2 und dem zweiten Datenendgerät TD2 zu.

Nach einer weiteren Ausführungsform des Verfahrens gemäß der Erfindung ist von dem zweiten Datenendgerät TD2 ein Abrufbefehl zum Abruf einer Datennachricht der kombinierten Nachricht erzeugbar, der der Steuerung ST zugeführt wird. Die Steuerung ST greift ausgelöst durch diesen Abrufbefehl auf die die Gesamtzahl und Reihenfolge der Sprach- und Datennachricht bezeichnende Information zu und ruft in der durch die Reihenfolgeinformation bestimmten Reihenfolge alle in der kombinierten Nachricht enthaltenen Datennachrichten aus der zweiten Speichereinrichtung SP2 ab und führt die Datennachrichten dem zweiten Datenendgerät TD2 zu. Den Datennachrichten, die ursprünglich von einem ersten Datenendgerät TD1 im Wechsel mit Sprachnachrichten gebildet wurden, sind beispielsweise die Reihenfolgeinformationen 1, 3, 5 oder 2, 4, 6 zugeordnet, wobei eine Gesamtzahl von sechs Sprach- und Datennachrichten in der kombinierten Nachricht unterstellt ist. Die Datennachrichten werden bei dieser Ausführungsform, wenn das Datenendgerät TD2 mit einem Bildschirm ausgestattet ist, auf diesem dargestellt. Ergänzend zu den auf dem Bildschirm dargestellten Datennachrichten sind die zugehörigen Sprachnachrichten über das zweite Sprachendgerät TS2 abhörbar. Vorzugsweise wird mittels der Tastatur des Datenendgerätes ein Curser in dem angezeigten Bild an vorgegebene Punkte an den Schnittstellen je zweier Datennachrichten, sowie vor der ersten oder nach der letzten Datennachricht geführt und ein Befehl zum Abruf der entsprechenden Sprachnachrichten an die Steuerung ST geleitet. Die Steuerung ST ruft die Sprachnachrichten entsprechend der Stellung des Cursers an einem der genannten Punkte aus der zweiten Speichereinrichtung SP2 ab und führt die Sprachnachrichten dem zweiten Sprachendgerät TS2 zu.

Der Anschluß der Endgeräte TS1 und TD1 beziehungsweise TS2 und TD2 an eine Doppelkanal-ISDN-Schnittstelle ermöglicht es, gleichzeitig beide Nutzdaten-"B"-Kanäle für die Bildung und den Abruf kombinierter Nachrichten auszunutzen. Die Bildung und der Abruf kombinierter Nachrichten kann alternati hierzu auch nur mittels eines Nutzdaten-"B"-Kanals erfolgen, der endgeräteseitig oder durch die den Speichereinrichtungen SP zugeordnete Steuerung ST in der Weise umgeschaltet wird, daß entweder eine Verbindung zwischen Sprachendgerät und Steuerung ST oder eine Verbindung zwischen Datenendgerät und Steuerung ST gebildet wird. Die Endgeräte TS1 und TD1 bzw. TS2 und TD2 sind in diesem Fall auch an eine Einkanal-ISDN-Schnittstelle ankoppelbar.

Nach einer weiteren Ausführungsform des Verfahrens gemäß der Erfindung wird von dem ersten Sprachendgerät TS1 oder von dem ersten Datenendgerät TD1 eine aus Sprach- und Nichtsprachbestandteilen bestehende kombinierte Nachricht gebildet, wobei eine erste Sprach- oder Datennachricht bereits in der dem Endgerät TS1 oder TD1 zugeordneten Speichereinrichtung SP1 vorliegt. Die vorliegende Nachricht kann insbesondere von anderen internen Endgeräten TS2, TD2 oder von externen, in der Figur nicht dargestellten Teilnehmerstellen der Speichereinrichtung SP1 zugeführt worden sein, wobei die zugeführte Nachricht mit den Nachrichtenabsender (TS2, TD2; Speichereinrichtungen, externe Teilnehmerstellen) identifizierende Daten ergänzt sein kann.

Das erste Sprachendgerät TS1 oder das erste Datenendgerät TD1 ruft zunächst die vorliegende Nachricht entsprechend der oben dargestellten Abrufprozeduren aus der Speichereinrichtung SP1 ab und ergänzt die abgerufene Nachricht durch eine Sprach- oder Datennachricht bzw. durch Sprach- und Datennachrichten entsprechend der ebenfalls der oben dargestellten Prozeduren. Mittels der den Nachrichtenabsender identifizierenden Daten ist eine die Rufnummer des Nachrichtenabsenders darstellende Wählinformation erzeugbar. Die kombinierte Nachricht läßt sich somit an den Nachrichtenabsender zustellen.

**Patentansprüche**

1. Verfahren zur Bildung elektronischer, aus Sprach- und Nichtsprachbestandteilen bestehender Kommunikationsdienstnachrichten in einer Kommunikationsdienstvermittlungsanlage mit Sprachendgeräten (TS) und Datenendgeräten (TD), wobei jeweils ein Sprachendgerät (TS) und mindestens ein Datenendgerät (TD) mit einer gemeinsamen Teilnehmeranschlußschaltung (NT) verbunden und über eine gemeinsame Rufnummer anwählbar sind, mit den Sprachendgeräten (TS) und den Datenendgeräten (TD) zugeordneten Speichereinrichtungen (SP, SP1, SP2, ...) und mit einer den Speichereinrichtungen zugeordneten Steuerung (ST), dadurch gekennzeichnet, daß von einem ersten Sprachendgerät (TS1) oder von einem mit dem ersten Sprachendgerät (TS1) über eine gemeinsame Teilnehmeranschlußschaltung (NT1) verbundenen ersten Datenendgerät (TD1) ein erster, die Erstellung einer aus Sprach- und Nichtsprachbestandteilen bestehenden Nachricht kennzeichnender Befehl erzeugt und der den Speichereinrichtungen (SP) zugeordneten Steuerung (ST) zugeführt wird, daß die den Speichereinrichtungen (SP) zugeordnete Steuerung (ST) die Eingabe von Sprach- oder Datennachrichten in das erste Sprachendgerät (TS1) oder in das erste Datenendgerät (TD1) freigibt und eingegebene Sprach- oder Datennachrichten in eine erste Speichereinrichtung (SP1) einspeichert, daß von dem ersten Sprachendgerät (TS1) oder dem ersten Datenendgerät (TD1) ein zweiter, die Umschaltung von dem zuvor aktivierten ersten Sprachendgerät (TS1) auf das Datenendgerät (TD1) oder von dem zuvor aktivierten ersten Datenendgerät (TD1) auf das erste Sprachendgerät (TS1) kennzeichnender Befehl erzeugt und dieser Befehl der den Speichereinrichtungen (SP) zugeordneten Steuerung (ST) zugeführt wird,

daß die Steuerung (ST) die Eingabe von Daten- oder Sprachnachrichten in das durch die Umschaltung aktivierte erste Datenendgerät (TD1) oder Sprachendgerät (TS1) freigibt und eingegebene Sprach- oder Datennachrichten in die erste Speichereinrichtung (SP1) einspeichert,

daß von dem aktivierten ersten Datenendgerät (TD1) oder Sprachendgerät (TS1) ein den Abschluß der mehrteiligen kombinierten Sprach- und Datennachricht kennzeichnender dritter Befehl erzeugt und der den Speichereinrichtungen (SP) zugeordneten Steuerung (ST) zugeführt wird,

daß die Steuerung (ST) ein die Übertragung der mehrteiligen kombinierten Sprach- und Datennachrichten sowie den Einzelabruf von Sprach- und Datennachrichten aus der kombinierten Sprach- und Datennachricht ermöglichendes Datenformat generiert.

2. Verfahren nach Anspruch 1,
**dadurch gekennzeichnet,**

daß vor der Erzeugung des den Abschluß der mehrteiligen kombinierten Sprach- und Datennachricht kennzeichnenden dritten Befehls das durch die Umschaltung aktivierte erste Datenendgerät (TD1) oder Sprachendgerät (TS1) jeweils einen, weitere Umschaltungen auf das jeweils andere zuvor nicht aktivierte erste Sprachendgerät (TS1) oder Datenendgerät (TD1) bewirkenden Befehl erzeugt und dieser Befehl der den Speichereinrichtungen (SP) zugeordneten Steuerung (ST) zugeführt wird,

daß die Steuerung (ST) die Eingabe von Sprachnachrichten oder Datennachrichten in das durch die weiteren Umschaltungen aktivierte erste Sprachendgerät (TS1) oder Datenendgerät (TD1) freigibt, und eingegebene Sprach- oder Datennachrichten in die erste Speichereinrichtung (SP1) einspeichert.

3. Verfahren nach Anspruch 1 oder 2,
**dadurch gekennzeichnet,** daß die Steuerung (ST) für jede in die erste Speichereinrichtung (SP1) einzuspeichernde Sprach- und Datennachricht einen durch das erste Sprachendgerät (TS1) oder Datenendgerät (TD1) umsetzbaren Hinweis auf den Status der betreffenden Sprach- oder Datennachricht als Teil einer kombinierten Sprach- und Datennachricht erzeugt, diesen Hinweis in die jeweilige Sprach- oder Datennachricht einfügt und/oder von der jeweiligen Sprach- oder Datennachricht getrennt in die erste Speichereinrichtung (SP1) abspeichert.

4. Verfahren nach Anspruch 2 und 3,

**dadurch gekennzeichnet,** daß die Steuerung (ST) für jede in die erste Speichereinrichtung (SP1) einzuspeichernde Sprach- und Datennachricht eine die Gesamtzahl der Sprach- und Datennachrichten und die Reihenfolge der jeweiligen Sprach- oder Datennachricht innerhalb der kombinierten Nachricht bezeichnende Information erzeugt, diese Information in die jeweilige Sprach- und Datennachricht einfügt und/oder von der jeweiligen Sprach- und Datennachricht getrennt in die erste Speichereinrichtung (SP1) abspeichert.

5. Verfahren nach einem der vorstehenden Ansprüche,
**dadurch gekennzeichnet,** daß nach Übertragung der von dem ersten Sprachendgerät (TS1) und von dem ersten Datenendgerät (TD1) erzeugten kombinierten Nachricht und gegebenenfalls des Statushinweises und der die Gesamtzahl und die Reihenfolge der Sprach- und Datennachrichten innerhalb der kombinierten Nachricht bezeichnenden Information von der ersten Speichereinrichtung (SP1) zu einer zweiten Speichereinrichtung (SP2) von einem zweiten Sprachendgerät (TS2) oder einem zweiten, mit dem zweiten Sprachendgerät (TS2) über eine zweite Teilnehmeranschlußschaltung (NT2) verbundenen zweiten Datenendgerät (TD2) ein erster Abrufbefehl zum Abruf einer Sprachnachricht

oder Datennachricht aus der zweiten Speichereinrichtung (SP2) erzeugt und der Steuerung (ST) zugeführt wird,

daß die Steuerung (ST) die erste Sprach- oder Datennachricht der kombinierten Nachricht aus der zweiten Speichereinrichtung (SP2) abruft und dem den ersten Abrufbefehl erzeugenden zweiten Sprachendgerät (TS2) oder zweiten Datenendgerät (TD2) zuführt,

daß von dem zweiten Datenendgerät (TD2) oder dem zweiten Sprachendgerät (TS2) nach Zufuhr der ersten Sprach- und Datennachricht der kombinierten Nachricht ein zweiter Abrufbefehl zum Abruf einer Daten- oder Sprachnachricht erzeugt und der Steuerung (ST) zugeführt wird,

daß die Steuerung (ST) die erste Daten- oder Sprachnachricht der kombinierten Nachricht aus der ersten Speichereinrichtung (SP1) abruft und dem zweiten Datenendgerät (TD2) oder Sprachendgerät (TS2) zuführt.

6. Verfahren nach den Ansprüchen 4 und 5,
**dadurch gekennzeichnet,** daß die Steuerung (ST) ausgelöst durch weitere von dem zweiten Datenendgerät (TD2) oder dem zweiten Sprachendgerät (TS2) erzeugte Abrufbefehle auf die in der zweiten Speichereinrichtung (SP2) abgespeicherte, die Gesamtzahl und die Reihenfolge der Sprach-und Datennachrichten innerhalb der kombinierten Nachricht bezeichnende Information zugreift und in der durch die Reihenfolgeinformation bestimmten Reihenfolge Sprach- und Datennachrichten aus der zweiten Speichereinrichtung (SP2) abruft und dem zweiten Sprachendgerät (TS2) und dem zweiten Datenendgerät (TD2) zuführt.

7.  Verfahren nach Anspruch 4,
    **dadurch gekennzeichnet,** daß nach Übertragung der von dem ersten Sprachendgerät (TS1) und von dem ersten Datenendgerät (TD1) erzeugten kombinierten Nachricht und gegebenenfalls des Statushinweises und der die Gesamtzahl und die Reihenfolge der Sprach- und Datennachrichten innerhalb der kombinierten Nachricht bezeichnenden Information von der ersten Speichereinrichtung (SP1) zu einer zweiten Speichereinrichtung (SP2) von einem zweiten Sprachendgerät (TS2) oder einem zweiten, mit dem zweiten Sprachendgerät (TS2) über eine zweite Teilnehmeranschlußschaltung (NT2) verbundenen zweiten Datenendgerät (TD2) ein Abrufbefehl zum Abruf aller Sprach- und Datennachrichten einer kombinierten Nachricht aus der zweiten Speichereinrichtung (SP2) erzeugt und der Steuerung (ST) zugeführt wird,
    daß die Steuerung (ST) auf die die Gesamtzahl und Reihenfolge der Sprach- und Datennachricht bezeichnende Information zugreift und in der durch die Reihenfolgeinformation bestimmten Reihenfolge Sprach- und Datennachrichten aus der zweiten Speichereinrichtung (SP2) abruft und dem zweiten Sprachendgerät (TS2) und dem zweiten Datenendgerät (TD2) zuführt.

8.  Vorrichtung zur Durchführung des Verfahrens nach Anspruch 1, bestehend aus einer Kommunikationsdienstvermittlungsanlage mit Einkanal- und/oder Doppelkanal-Schnittstellen (IF1, IF2), Teilnehmeranschlußschaltungen (NT1, NT2, NT3), Koppelfeld (KF) und zentraler Steuerung (ZST), aus einem ersten Sprachendgerät (TS1), das mit einem ersten Datenendgerät (TD1) über eine gemeinsame Einkanal-Schnittstelle (IF1) oder eine gemeinsame Doppelkanal-Schnittstelle (IF2) und eine Teilnehmeranschlußschaltung (NT1) verbunden ist, und aus einer ersten Speichereinrichtung (SP1), der eine mit einer Schnittstelle (IF1, IF2), einer Teilnehmeranschlußschaltung (NT3) und dem Koppelfeld (KF) verbundenen Steuerung (ST) zugeordnet ist.

9.  Vorrichtung nach Anspruch 8,
    **dadurch gekennzeichnet,** daß die Kommunikationsdienstvermittlungsanlage ein zweites Sprachendgerät (TS2) aufweist, das mit einem zweiten Datenendgerät (TD2) über eine gemeinsame Doppelkanal-Schnittstelle (IF2) und eine Teilnehmerschaltung (NT2) verbunden ist.

10. Vorrichtung nach Anspruch 8 oder 9,
    **dadurch gekennzeichnet,** daß die zentrale Steuerung (ZST) mit einer Einrichtung (G) verbunden ist, die ausgelöst durch Befehle der zentralen Steuerung (ZST) von Sprachendgeräten (TS1, TS2) und Datenendgeräten (TD1, TD2) umsetzbare Hinweise auf den Status der betreffenden Sprach- oder Datennachrichten als Teil einer kombinierten Sprach- und Datennachricht erzeugt.

**Claims**

1.  A method for forming electronic communication service messages, consisting of voice- and non-voice components, in a communication service switching system with voice terminals (TS) and data terminals (TD), one voice terminal (TS) and at least one data terminal (TD) in each case being connected to a common subscriber line interface circuit (NT) and being selectable via a common directory number, with memory devices (SP, SP1, SP2, ...) allocated to the voice terminals (TS) and to the data terminals (TD) and with a control system (ST) allocated to the memory devices, characterised in that a first command identifying the generation of a message consisting of voice and non-voice components is generated by a first voice terminal (TS1) or by a first data terminal (TD1) connected to the first voice terminal (TS1) via a common subscriber line interface circuit (NT1), and is supplied to the control system (ST) allocated to the memory devices (SP), in that the control system (ST) allocated to the memory devices (SP) enables the input of voice or data messages into the first voice terminal (TS1) or into the first data terminal (TD1) and stores input voice or data messages in a first memory device (SP1), in that a second command identifying the switchover from the previously activated first voice terminal (TS1) to the data terminal (TD1) or from the previously activated first data terminal (TD1) to the first voice terminal (TS1) is generated by the first voice terminal (TS1) or by the first data terminal (TD1) and this command is supplied to the control system (ST) allocated to the memory devices (SP), in that the control system (ST) enables the input of data or voice messages into the first data terminal (TD1) or voice terminal (TS1) activated by the switch-over and stores input voice or data messages in the first memory device (SP1), in that a third command identifying the termination of the multi-part combined voice and data message is generated by the activated first data terminal (TD1) or voice terminal (TS1) and is supplied to the control system (ST) allocated to the memory devices (SP), and in that the control system (ST) generates a data format enabling the multi-part combined voice and data messages to be transmitted and voice and data messages to be individually called up from the combined voice and data message.

2. Method according to claim 1, characterised in that, before the generation of the third command identifying the termination of the multi-part combined voice and data message, the first data terminal (TD1) or voice terminal (TS1) activated by the switch-over in each case generates a command effecting further switch-overs to the respective other first voice terminal (TS1) or data terminal (TD1) previously not activated and this command is supplied to the control system (ST) allocated to the memory devices (SP),
that the control system (ST) enables voice messages or data messages to be input into the first voice terminal (TS1) or data terminal (TD1) activated by the further switch-overs, and stores input voice or data messages in the first memory device (SP1).

3. Method according to Claim 1 or 2, characterised in that the control system (ST) generates for each voice or data message to be stored in the first memory device (SP1) an indication, which can be converted by the first voice terminal (TS1) or data terminal (TD1), of the status of the relevant voice or data message as part of a combined voice or data message, inserts this indication in the respective voice or data message and/or stores it separately from the respective voice or data message in the first memory device (SP1).

4. Method according to Claim 2 and 3, characterised in that the control system (ST) generates for each voice or data message to be stored in the first memory device (SP1) an information designating the total number of voice and data messages and the order of the respective voice or data message within the combined message, inserts this information into the respective voice and data message and/or stores it separately from the respective voice and data message in the first memory device (SP1).

5. Method according to one of the preceding claims, characterised in that, after transmission of the combined message generated by the first voice terminal (TS1) and by the first data terminal (TD1), and possibly of the status indication and the information designating the total number and the order of the voice and data messages within the combined message from the first memory device (SP1) to a second memory device (SP2) of a second voice terminal (TS2) or a second data terminal (TD2) connected to the second voice terminal (TS2) via a second subscriber line interface circuit (NT2), a first call-up command for calling up a voice message or data message from the second memory device (SP2) is generated and supplied to the control system (ST),
that the control system (ST) calls up the first voice or data message of the combined message from the second memory device (SP2) and supplies it to the second voice terminal (TS2) or second data terminal (TD2) generating the first call-up command,
that a second call-up command for calling up a data or voice message is generated by the second data terminal (TD2) or the second voice terminal (TS2) after the first voice and data message of the combined message has been supplied, and is supplied to the control system (ST),
that the control system (ST) calls up the first data or voice message of the combined message from the first memory device (SP1) and supplies it to the second data terminal (TD2) or voice terminal (TS2).

6. Method according to Claims 4 and 5, characterised in that the control system (ST), enabled by further call-up commands generated by the second data terminal (TD2) or the second voice terminal (TS2), accesses the information stored in the second memory device (SP2) and designating the total number and order of the voice and data messages within the combined message, and calls up voice and data messages from the second memory device (SP2) in the order determined by the order information and supplies these messages to the second voice terminal (TS2) and the second data terminal (TD2).

7. Method according to Claim 4, characterised in that, after transmission of the combined message generated by the first voice terminal (TS1) and by the first data terminal (TD1), and possibly of the status indication and of the information designating the total number and the order of voice and data messages within the combined message, from the first memory device (SP1) to a second memory device (SP2) of a second voice terminal (TS2) or a second data terminal (TD2) connected to the second voice terminal (TS2) via a second subscriber line interface circuit (NT2), a call-up command for calling up all voice and data messages of a combined message from the second memory device (SP2) is generated and supplied to the control system (ST),

that the control system (ST) accesses the information designating the total number and order of voice and data message and calls up voice and data messages from the second memory device (SP2) in the order determined by the order information and supplies these messages to the second voice terminal (TS2) and the second data terminal (TD2).

8. Device for carrying out the method according to Claim 1, consisting of a communication service switching system with single-channel and/or dual-channel interfaces (IF1, IF2), subscriber line interface circuits (NT1, NT2, NT3), switching matrix (KF) and central control system (ZST), of a first voice terminal (TS1), which is connected to a first data terminal (TD1) via a common single-channel interface (IF1) or a common dual-channel interface (IF2) and a subscriber line interface circuit (NT1), and of a first memory device (SP1), to which a control system (ST) connected to an interface (IF1, IF2), a subscriber line interface circuit (NT3) and the switching matrix (KF) is allocated.

9. Device according to Claim 8, characterised in that the communication service switching system exhibits a second voice terminal (TS2) which is connected to a second data terminal (TD2) via a common dual-channel interface (IF2) and a subscriber line interface circuit (NT2).

10. Device according to Claim 8 or 9, characterised in that the central control system (ZST) is connected to a device (G) which, enabled by commands of the central control system (ZST), generates indications of the status of the relevant voice or data messages, which can be converted by voice terminals (TS1, TS2) and data terminals (TD1, TD2), as part of a combined voice and data message.

**Revendications**

1. Procédé pour former des informations de service de communication, constituées d'éléments vocaux et d'éléments non vocaux, dans une installation de commutation de service de communication comportant des terminaux vocaux (TS) et des terminaux de transmission de données (TD), respectivement un terminal vocal (TS) et au moins un termina] de transmission de données (TD) étant réunis à un circuit de raccordement d'abonné commun (NT) et pouvant être sélectionnés par l'intermédiaire d'un numéro d'appel commun, et comportant des terminaux vocaux (TS) et des dispositifs de mémoire (SP,SP1,SP2,...) associés aux terminaux de transmission de données (TD), et une unité de commande (ST) associée aux dispositifs de mémoire, caractérisé par le fait qu'une première instruction caractérisant l'établissement d'une information constituée par des éléments vocaux et des éléments non vocaux est formée par un premier terminal vocal (TS1) ou par un premier terminal de transmission de données (TD1), raccordé au premier terminal vocal (TS1) par l'intermédiaire d'un circuit de raccordement d'abonné commun (NT1), et est envoyée à l'unité de commande (ST) associée aux dispositifs de mémoire (SP), et

que l'unité de commande (ST) associée aux dispositifs de mémoire (SP) autorise l'introduction d'informations vocales ou d'informations de données dans le premier terminal vocal (TS1) ou dans le premier terminal de transmission de données (TD1) et mémorise des informations vocales ou des informations de données introduites, dons un premier dispositif de mémoire (SP1),

qu'une seconde instruction caractérisant la commutation du premier terminal vocal (TS1) activé ou préalable, au terminal de transmission de donnés (TD1) ou du premier terminal de transmission de données (TD1), activé auparavant, au premier terminal vocal (TS1) est formé par le premier terminal vocal (TS1) ou par le premier terminal de transmission de données (TD1) et que cette instruction est envoyée à l'unité de commande (ST) associée aux dispositifs de mémoire (SP),

que l'unité de commande (ST) déclenche l'introduction d'informations de données ou d'informations vocales dans le premier terminal de transmission de données (TD1) ou le terminal vocal (TS1), activé par la commutation et mémorise des informations vocales ou des informations de données introduites, dans le premier dispositif de mémoire (SP1),

qu'une troisième instruction caractérisant la fin de l'information vocale et de l'information de données, combinées et formées de plusieurs éléments, est formée par le premier terminal de transmission de données (TD1) ou par le premier terminal vocal (TS1), activé, et est envoyée à l'unité de commande (ST) associée aux dispositifs de mémoire (SP),

qu'une unité de commande (ST) produit un format de données, qui permet la transmission des informations vocales et des informations de données, combinées et formées de plusieurs éléments, ainsi que l'appel individuel d'informations vocales et d'informations de données à partir de l'information vocale et de l'information de données, combinées.

2. Procédé suivant la revendication 1, caractérisé par le fait

qu'avant la production de la troisième instruction caractérisant la fin de l'information vocale et de l'information de données, formées de plusieurs éléments et combinées, le premier terminal de transmission de données (TD1) ou le premier terminal vocal (TS1), activé par la commutation, produit respectivement une instruction qui déclenche d'autres commutations sur respectivement l'autre premier terminal vocal (TS1) ou l'autre premier terminal de transmission de données (TD1), non activé auparavant, et que cette instruction est envoyée à l'unité de commande (ST) associée aux dispositifs de mémoire (SP), et

que l'unité de commande (ST) autorise l'introduction d'informations vocales ou d'informations de données dans le premier terminal vocal (TS1) ou dans le premier terminal de transmission de données (TD1), activés par les commutations suivantes, et mémorise des informations vocales ou des informations de données introduites, dans le premier dispositif de mémoire (SP1).

3. Procédé suivant la revendication 1 ou 2, caractérisé par le fait que l'unité de commande (ST) produit, pour chaque information vocale et chaque information de données devant être mémorisée dans le premier dispositif de mémoire (SP1), une indication pouvant être convertie par le premier terminal vocal (TS1) ou le premier terminal de transmission de données (TD1) et concernant l'état de l'information vocale ou de l'information de données considérée, en tant que partie d'une information vocale et d'une information de données, combinées, introduit cette indication dans l'information vocale ou l'information de données respective et/ou mémorise séparément de l'information vocale ou de l'information de données respective, cette indication dans le premier dispositif de mémoire (SP1).

4. Procédé suivant les revendications 2 et 3, caractérisé par le fait que l'unité de commande (ST) produit, pour chaque information vocale et chaque information de données, qui doivent être mémorisées dans le premier dispositif de mémoire (SP1), une information désignant le nombre total des informations vocales et des informations de données et la succession de l'information vocale ou de l'information de données respective à l'intérieur de l'information désignant l'information combinée, insère cette information dans l'information vocale et dans l'information de données respectives et/ou mémorise cette information, séparément de l'information vocale et de l'information de données respectives, dans le premier dispositif de mémoire (SP1).

5. Procédé suivant l'une de revendications précédentes, caractérisé par le fait qu'après la transmission de l'information combinée produite par le premier terminal vocal (TS1) et par le premier terminal de transmission de données (TD1), et éventuellement de l'indication d'état et du nombre total et de la séquence des informations vocales et des informations de données à l'intérieur de l'information désignant l'information combinée, depuis le premier dispositif de mémoire (SP1) en direction d'un second dispositif de mémoire (SP2) par un second terminal vocal (TS2) ou un second terminal de transmission de données (TD2) raccordé au second terminal vocal (TS2) par l'intermédiaire d'un second circuit de raccordement d'abonné (NT2), une première instruction d'appel est produite pour l'appel d'une information vocale ou d'une information de données à partir du second dispositif de mémoire (SP2) et est envoyée à l'unité de commande (ST),

que l'unité de commande (ST) appelle la première information vocale ou la première information de données de l'information combinée à partir du second dispositif de mémoire (SP2) et l'envoie au second terminal vocal (TS2) ou au second terminal de données (TD2), qui produit la première instruction d'appel,

qu'après envoi de la première information vocale et de la première information de données de l'information combinée, une seconde instruction d'appel est produite par le second terminal de transmission de données (TD2) ou par le second terminal vocal (TS2) pour appeler une information de données ou une information vocale et est envoyée à l'unité de commande (ST),

que l'unité de commande (ST) appelle la première information de données ou la première information vocale de l'information combinée à partir du premier dispositif de mémoire (SP1) et l'envoie au second terminal de transmission de données (TD2) ou au second terminal vocal (TS2).

6.  Procédé suivant l'une des revendications 4 et 5, caractérisé par le fait que, d'une manière déclenchée par d'autres instructions d'appel produites par le second terminal de transmission de données (TD2) ou par le second terminal local (TS2), l'unité de commande (ST) accède à l'information mémorisée dans le second dispositif de mémoire (SP2) et désignant le nombre total et la succession des informations vocales et des informations de données à l'intérieur de l'information combinée, et appelle des informations vocales et des informations de données à partir du second dispositif de mémoire (SP2), selon la séquence déterminée par l'information de séquence et les envoie au second terminal vocal (TS2) et au second terminal de transmission de données (TD2).

7.  Procédé suivant la revendication 4, caractérisé par le fait qu'après transmission de l'information combinée produite par le premier terminal] vocal (TS1) et par le premier terminal de transmission de données (TD1), et éventuellement de l'indication d'état et de l'information désignant le nombre total et la séquence des informations vocales et des informations de données à l'intérieur de l'information combinée, depuis le premier dispositif de mémoire (SP1) à un second dispositif de mémoire (SP2), une instruction d'appel est produite par un second terminal vocal (TS2) ou par un second terminal de transmission de données (TD2) raccordé au second terminal vocal (TS2) par l'intermédiaire d'un second circuit de raccordement d'abonné (NT2), pour appeler toutes les informations vocales et toutes les informations de données d'une information combinée à partir du second dispositif de mémoire (SP2) et est envoyée à l'unité de commande (ST), que l'unité-de commande (ST) accède à l'information désignant le nombre total et la séquence de l'information vocale et de l'information de données et appelle des informations vocales et des informations de données à partir du second dispositif de mémoire (SP2), selon la séquence déterminée par l'information de séquence, et les envoie au second terminal vocal (TS2) et au second terminal de transmission de données (TD2).

8.  Dispositif pour la mise en oeuvre du procédé suivant la revendication 1, constitué par une installation de commutation de service de communication comportant des interfaces à un canal et/ou à deux canaux (IF1, IF2), des circuits ce raccordement d'abonnés (NT1, NT2, NT3), un champ de couplage (KF) et une unité de commande centrale (ZST), par un premier terminal vocal (TS1), qui est raccordé au premier terminal de transmission de données (TD1) par l'intermédiaire d'une interface commune à canal (IF1) ou d'une interface à deux canaux commune (IF2) et d'un circuit de raccordement d'abonné (NT1), et par un premier dispositif de mémoire (SP1), auquel est associée une unité de commande (ST), qui est raccordée à une interface (IF1, IF2), à un circuit de raccordement d'abonné (NT3) et au champ de couplage (KF).

9.  Dispositif suivant la revendication 8, caractérisé par le fait que l'installation de commutation de service de communication comporte un second terminal vocal (TS2), qui est raccordé à un second terminal de transmission de données (TD2) par l'intermédiaire d'une interface à deux canaux commune (IF2) d'un circuit de raccordement d'abonné (NT2).

10. Dispositif suivant la revendication 8 ou 9, caractérisé par le fait que l'unité de commande centrale (ZST) est raccordée à un dispositif (G) qui, d'une manière déclenchée par des instructions de l'unité de commande centrale (ZST), produit des indications pouvant être converties par des terminaux vocaux (TS1,TS2) et des terminaux de transmission de données (TD1,TD2) et concernant l'état des informations vocales ou des informations de données concernées, en tant que partie d'une information vocale et d'une information de données combinées.